# EUROPEAN PATENT APPLICATION

(11) **EP 0 713 091 A1**
(43) Date of publication of application: **22.05.1996**
(21) Application number: 95307195.8
(22) Date of filing: 11.10.1995
(51) Int. Cl.: G01N 31/10, G01N 31/12, B01J 8/06, G01N 33/00

(54) **A catalyst assembly**

(30) Priority: 11.10.1994 GB 9420481
(71) Applicant: D.R. Taylor Research & Development Ltd., Altrincham, Cheshire WA15 0LT (GB)
(72) Inventor: Taylor,David Russel, Hale, Cheshire WA15 0LT (GB); Green,Colin Andrew, Beddington, Surrey CR0 4SR (GB)

(57) **Abstract**

A VOC analyser comprising an input port (1), a hydrocarbon to carbon dioxide catalytic converter, an exit port (2) and a CO₂ detector operable to detect the amount of hydrocarbon converted into CO₂ is described. The catalytic converter comprises a housing containing a plurality of beads of a catalyst material (3) and a plurality of beads of an inert material of high thermal conductivity, e.g. stainless steel ball bearings (4), interspersed therein. The inclusion of such beads improves heat transfer. Additionally, an inert gas purging system is employed to dry the analyser prior to analysis and the sample gas concentration is lowered prior to detection by passing it into an increased volume chamber. The sample is circulated into a larger volume using dry inert gas and this simultaneously lowers the relative humidity in the analyser.

## Description

The present invention relates to a catalyst assembly and, in particular, but not exclusively, to a catalyst assembly which is designed to convert general hydrocarbons, such as organic vapours and gases of unknown composition into carbon dioxide and water for subsequent quantitative analysis. A method of carrying out such quantitative analysis is also described.

Worldwide legislation is putting increasing pressure on operators of hydrocarbon producing processes to monitor their polluting emissions. This includes many classes of compounds but volatile organic compounds (VOC's) are of significant concern. Current techniques for measuring VOC's do not give accurate measurements for mixed hydrocarbon samples as they rely upon calibrating the equipment to a single type of VOC, typically methane. This technique is not a problem when the emission gases contain only a single VOC but most emissions contain complex VOC mixtures and each VOC gives a slightly different response mg for mg of carbon when compared , for instance, to methane.

Methods of analysing total carbon content by carbon combustion using an oxidising catalyst are known. However, for total conversion the temperature of the oxidising catalyst must be relatively high (350°C - 400°C). In known car exhaust converters the efficiency of the conversion is assisted by the hot exhaust gases but this is not the case where conversion of relatively cool emission gases is required. The known techniques of total carbon conversion are not able to completely heat the cool emission gases to the required conversion temperature and thus suffer from the disadvantage of incomplete conversion of emission gases. The percentage of VOC converted by such techniques is variable causing fluctuations in the measurements.

An object of the present invention is to provide a catalytic converter which overcomes these problems. In particular, it is an object of the invention to provide a catalytic converter which improves heat transfer to incoming gases and reaction yield. It is a further object of the present invention to provide a catalyst assembly which can operate at quicker analyses rates.

According to the present invention, there is provided a VOC analyser comprising an input port, a hydrocarbon to carbon dioxide catalytic converter, an exit port and a CO₂ detector operable to detect the amount of hydrocarbon converted into CO₂, wherein the catalytic converter comprises a housing containing a plurality of beads of a catalyst material and a plurality of beads of an inert material of high thermal conductivity interspersed therein.

The high thermal conductivity beads improve the heat transfer to the incoming gases and also improve the heat transfer within the catalyst assembly which renders the assembly easier to heat to operating conversion temperatures. Typically, an inert gas purging system is employed to dry the analyser prior to analysis and the sample gas concentration is lowered prior to detection by passing it into an increased volume chamber. Preferably, the sample is circulated into a larger volume using dry inert gas and this simultaneously lowers the relative humidity in the analyser.

The simultaneous drying and circulating of the sample gases using a single purge of dry inert gas further improves the efficiency of the process and reduces the number of steps necessary to complete the process. Thus, according to a second aspect of the present invention there is provided a method of analysing a hydrocarbon sample using a VOC analyser comprising a sample input port, a hydrocarbon to carbon dioxide catalytic converter, an exit port and a CO₂ detector operable to detect the amount of hydrocarbon converted into CO₂, wherein, prior to combustion, the sample is circulated into a larger volume using dry inert gas and this simultaneously lowers the relative humidity in the analyser.

According to a third aspect of the present invention there is provided a method of analysing VOC in a gas emission comprising the steps of;
pumping a volume of sample gas into an analyser, circulating the sample into a larger volume, reducing the relative humidity in the catalyser, converting the hydrocarbon sample into CO₂ using a catalytic converter,
and detecting the amount of CO₂ so produced, wherein the catalytic converter comprises a housing containing a plurality of beads of a catalyst material and a plurality of beads of an inert material of high thermal conductivity interspersed therein. Preferably, the steps of circulating the sample into a larger volume and reducing the relative humidity in the catalyser are carried out in a single step using a dry inert gas.

According to a fourth aspect of the present invention there is provided a catalyst assembly comprising an input port, a hydrocarbon to carbon dioxide catalytic converter, and an exit port, wherein the catalytic converter comprises a housing containing a plurality of beads of a catalyst material and a plurality of beads of an inert material of high thermal conductivity interspersed therein. Preferably, the housing comprises a tube of high thermal conductivity which is itself housed within a block of material of high thermal conductivity including heating means. Furthermore, the beads and housing are, typically, made of an inert corrosion resistant material such as stainless steel with a high molybdenum content.

The beads and the housing have the additional advantage of being able to withstand the stresses of an internal explosion. The catalyst assembly is designed and constructed so that when a hydrocarbon vapour mixture of unknown concentration is passed over it, this will result in the complete conversion of the gas into carbon dioxide and water vapour. Further this will occur without degrading the performance of the catalyst material or its enclosure. The catalyst is further designed and constructed so that it will not represent an explosion risk directly or indirectly to associated components within the system, to which it may be attached. Any flame front, whether this is internally generated or produced from an external source, will be trapped and extinguished at the entry or exit port of the device, causing no damage or performance degradation. In operation the conversion of hydrocarbon gas and vapour into carbon dioxide and water vapour may cause a slight increase in internal pressure. This increase in pressure and the possible contamination by other chemical compounds in the presence of water vapour would not degrade performance significantly.

The heated catalyst assembly preferably comprises two parts:-
- a): a tubular steel explosion proof housing containing the catalyst material, and
- b): an electrically heated metal block to provide a constant temperature environment for the catalyst housing to operate effectively.

In addition to the above, an electrical control system may be provided, capable of regulating the temperature of the catalyst/block assembly during operation.

This invention and preferred features are more particularly described hereinafter with reference to the accompanying
Figure 1shows the catalyst assembly in longitudinal section,
Figure 2 shows in side view and end view the heater block into which the assembly of Figure 1 is located.
drawings wherein:-

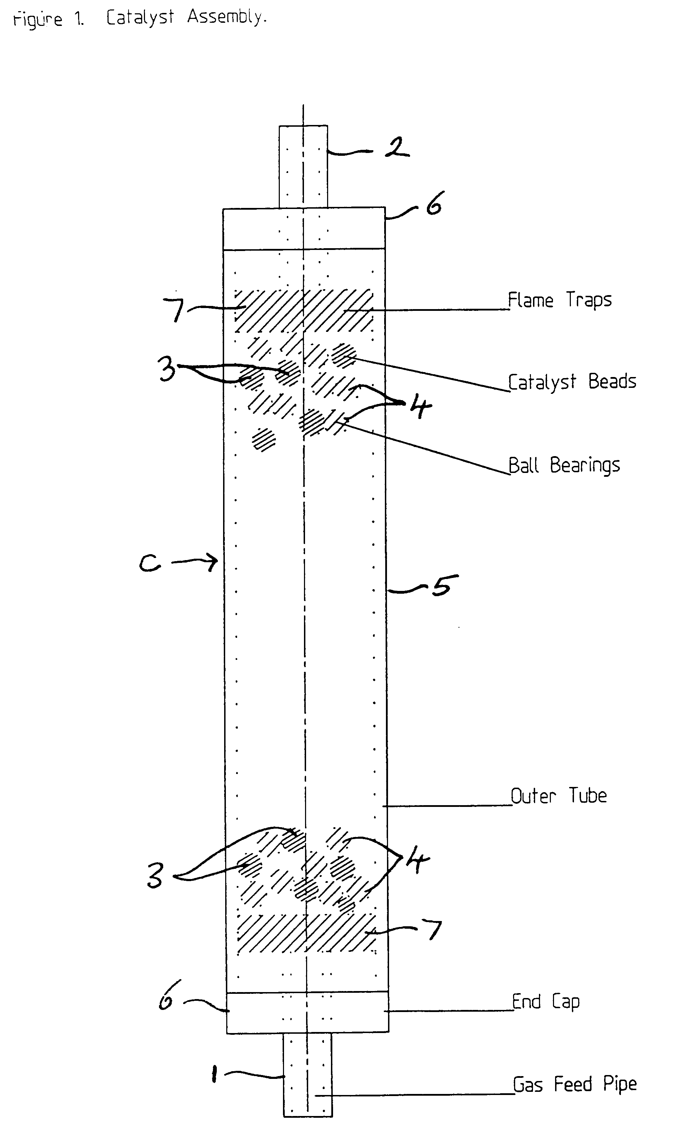

Reference is made firstly to Figure 1, which shows a cross section of a catalyst assembly. The catalyst assembly C is designed to be easily replaced as a component part of a larger system and is constructed so that it may not be tampered with once supplied as a unit. The construction is such that the device will withstand an internal explosion should one occur and will arrest a flame front before it emerges from either the inlet 1 or exit 2 port.

The preferred catalyst material is a highly porous ceramic bead material 3, coated with the precious transition metal platinum. The beads have a very large surface area relative to their overall diameter. This type of construction allows very efficient catalytic converters to be made that are physically small. The material operates at an optimum temperature of approximately 350 to 400 degrees Celsius.

For the catalyst assembly described, external heat input must be supplied as the gas entering the device will be at a low temperature, typically between 20 to 85 degrees Celsius. The catalyst assembly must therefore be capable of very quickly raising the temperature of the gas as it enters the active converter region in order that the reaction may take place. The internal construction comprises a mixture of platinum ceramic catalyst 3 and stainless steel ball bearings 4. The ball bearings have a relatively high specific heat capacity, compared to the catalyst material and therefore provide a good thermal interface between the gas flow and the platinum beads. The amount of catalyst material in the assembly must be sufficient to give greater than 95% conversion of the hydrocarbon into carbon dioxide, when the hydrocarbon loading is significantly higher than expected.

The ball bearings 4, external tube 5 and end cap pieces 6 are made of inert corrosion resistant grade of stainless steel, with high Molybdenum content. The material has adequate thermal conduction properties and can easily withstand the stresses of an internal explosion. The end caps 6 may be welded in place after assembly forming a gas tight seal.

Mesh flame arresters 7 are fitted to both ends of the catalyst assembly in order to prevent flames from entering or exiting the assembly. They are made of the same inert material as the enclosure 5 and end caps 6. They also contain the catalyst beads 3 and ball bearings 4 within the enclosure 5. The flame arresters also absorb any longitudinal thermal expansion or contraction of the enclosure and contents.

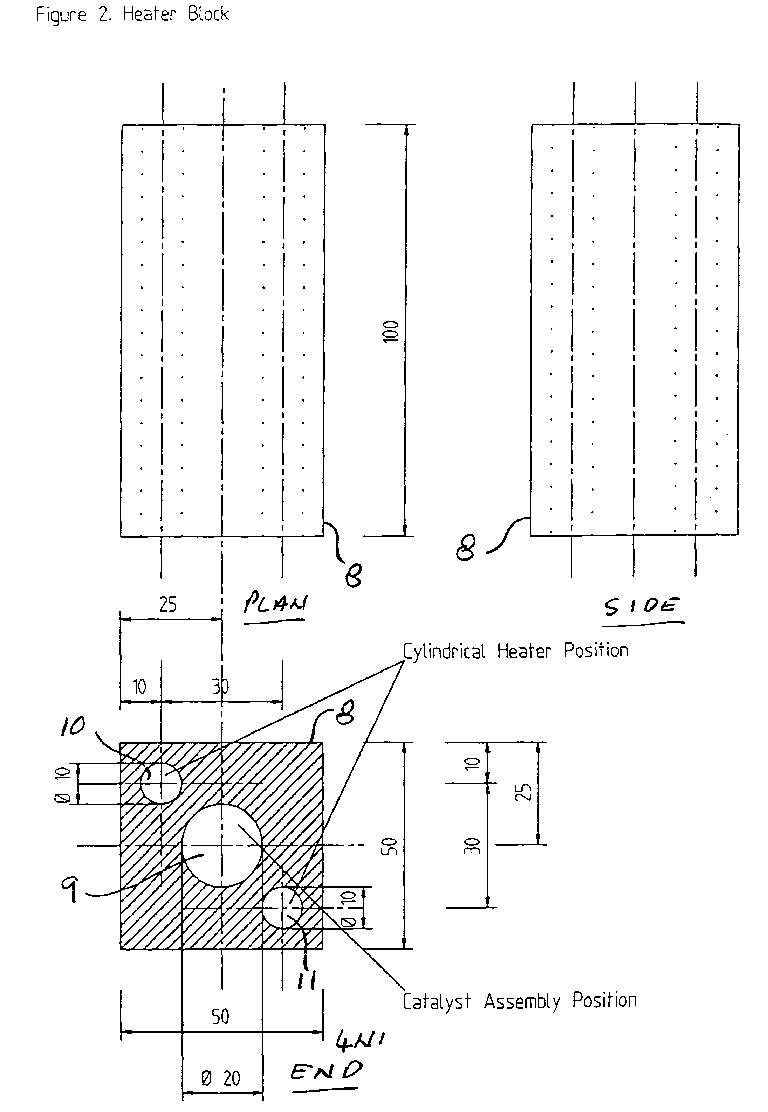

Reference is now made to Figure 2 which shows the construction of the catalyst heater block in side view, plan view and end view. The block 8 comprises a single machined piece of brass, copper or stainless steel chosen for high thermal conductivity and specific heat capacity. The block once machined may be electroplated to inhibit further corrosion and discolouration as a result of temperature cycling during operation, initial heating and ,final cooling. The block has a central bore 9 for fitting the catalyst housing 5 through the centre of the block, where it is mechanically secured in place with screws.

Two cylindrical cartridge heaters are also fitted in a similar manner in borings 10 and 11. These heaters run the full length of the block in order to maximise the surface area that is in contact. The machining tolerances are such that both the catalyst housing and cartridge heaters are a good interference fit inside the block in order to improve thermal transfer. High temperature thermal jointing compound may optionally be used in assembly to assist with thermal conductivity between component parts.

Provision is made for the connection of a thermocouple junction (not shown) for measurement of the block temperature. The output of the thermocouple is connected to the electrical control system so that the junction voltage may be used for temperature regulation and control purposes. The precise location of the junction is not considered important as the different parts of the block are only likely to differ by a few degrees relative to the average block temperature. Provision is made for the attachment of sections of thick rigid mineral based insulation material on each longitudinal face of the heater block. This is in order to reduce heat loss from the block to the surroundings. The catalyst assembly is designed so that it may be installed into an enclosure containing for example sensitive electronic apparatus. Heat loss to the surroundings from the block should therefore be kept to a minimum in order to reduce the risk of damage to adjacent objects.

Good insulation will assist energy efficiency and therefore operating costs. The operating temperatures are such that it must be impossible to come directly in contact with the block during normal operation.

An electrical control system is used to meet the requirement of a temperature measurement and control system in order to properly maintain correct operating temperatures within the catalyst assembly.

The control system accepts as input the block thermocouple junction temperature and corrects this by means of a cold reference junction situated on the control instrument electronics. This improves measurement accuracy at the remote measurement junction. The operating set point temperature may be programmed in by hand or configured by other means.
Operating temperatures for efficient catalysis are considered to be in the order of 350 to 400 degrees Celsius. If methane is known to be present in the gas sample, temperatures of about 600 degrees Celsius will be required for combustion to take place. The control system must therefore be capable of regulating about the set point temperature, with good accuracy under all operation conditions. The temperature controller would be a three term, that is a so called proportional, integral, derivative (P.I.D.) type. This type of controller can be optimised to suit the thermal characteristics of the catalyst/heater block.

The system comprising the catalyst and heater block is not thermodynamically simple, as the gas that passes through the assembly transfers some heat away from the catalyst material, enclosure and block. In principle, this process would call for an increase in heat input power when cooler gas is flowing through the catalyst.

An important feature of catalysis is that the conversion of hydrocarbon gases to carbon dioxide and water vapour actually produces heat as part of the conversion process. In theory, this would call for a reduction in heat input power in order to sustain correct operating temperatures.

The gas flow rates, catalyst assembly and heater block size, together with the maximum heater output power ratings are chosen such that the effects, combined or otherwise, of gas cooling and catalysis are very small compared with the overall heat input requirements of the assembly when treated as a complete system. In the thermodynamic analysis, these factors may be safely ignored.

The amount of catalyst required for the combustion is small. The catalyst is a porous ceramic bead with a high surface area, doped with metallic platinum. Approximately 0.002 m³ surface area is required to catalyse the combustion process, given the internal swept volume of the catalyst assembly and typically that of any associated equipment that may be attached to it.

The bead size is between 2 and 4mm in diameter (nominally 3mm spherical), which means that only 5 ml of bead catalyst is required to fully catalyse the reaction.

The ball bearings are also 3mm in diameter and are mixed with the catalyst when loading the catalyst tube. This must be done very carefully in order to evenly distribute the catalyst bead in the ball bearing matrix. The bead is brittle and easily shattered so adequate care must be exercised during the loading of the tube enclosure. The flame arresters provide a compliant means of retaining the mixture in place at final assembly.

Preferably, a ratio of ball bearings to catalyst of 10:1 in a 10cm x 6 mm container is provided which contains sufficient catalyst material for complete combustion and provide good heat transfer.

A suitable method for carrying out the invention will now be described but the invention is not to be construed as limited to the following method which is presented merely as an example of how the invention can be implemented.

A sample of variable but known volume is drawn into a preheated Platinum based catalyst where the VOC is converted into Carbon Dioxide. The Carbon Dioxide is then measured using a solid state or infra red sensor calibrated against known concentrations of Carbon Dioxide. Glass frit flame traps before the catalyst and after the catalyst ensure flame cannot escape from the catalyst assembly. A second sensor that is sensitive to General Hydrocarbon is present to ensure the catalyst is converting the VOC into Carbon Dioxide with 100% efficiency. The presence of Hydrocarbon in excess of what is expected indicates that the catalyst is not working to its maximum efficiency. A microprocessor converts the Carbon Dioxide value obtained into the mg C/m³ value, which is displayed either on an LED or remote control panel. Provision for a datalogger that can hold several hours of data is available. To ensure that the Carbon Dioxide value obtained is genuine, several check systems are operated. A second sensor sensitive to Carbon Dioxide is positioned in the sample stream before the catalyst, to measure the amount of Carbon Dioxide in the sample before catalysis. The value obtained from the pre catalysis sensor is subtracted from the value obtained post catalysis. An equal zero for the two sensors will be maintained electronically via the microprocessor. A thermocouple situated in the gas stream just before the pump records the gas temperature so that the carbon value can be calculated at reference conditions. The microprocessor will be specified to record arithmetic means of the values obtained over 5 second, 1 minute and 15 minute time intervals. The sensor and catalyst array will be maintained at 120°C to ensure condensation from the catalyst does not affect the sensor sensitivity. Various alarm settings are monitored by a microprocessor and includes the presence of General Hydrocarbon, Carbon Dioxide sensor zero variance and variance of the sample volume/rate. The sample stream is constructed from Teflon or a suitable grade of highly corrosion resistant stainless steel. The entire system may be constructed to meet intrinsically safe certification requirements.

Span gas and calibration gas ports are constructed in the sample probe before the catalyst.

To further increase sensitivity the sample is diluted 10 fold during the analysis. During the combustion of the hydrocarbon a slight increase in pressure is observed. In order to alleviate this pressure build up the sample is circulated into a larger volume. Dry nitrogen gas is used to purge the reaction area before the sample is catalysed. This has the effect of diluting the CO₂ concentration into the sensors most sensitive range. Also the dry nitrogen reduces the relative humidity value caused by the combustion to within limits that can be tolerated by the sensor.

The amount of catalyst required for the combustion is small. The catalyst is a ceramic bead with a high surface area, doped with metallic platinum. Approximately 0.002M³ surface area is required to catalyses the combustion process. The bead size is between 2 and 4 mm in diameter which means that only 5ml of bead catalyst is required to fully catalyses the reaction. Preferably, the ratio of steel ball bearings of 10:1 in a 10cm X 6cm container is provided which easily contains sufficient catalyst for combustion to occur and provide a good heat transfer.

Advantageously, the invention may be used to provide a device capable of producing an electric output on a continuous basis of total carbon content of sample gas stream expressed in standard terms. Furthermore, automatic system calibration is achieved with the span gas to ensure that the instrument is operating correctly. The carbon content of the gas sample can then be expressed in terms of a known calibration gas.

A further additional feature may include very precise control of the power input to the catalyst heater block using mains power to the cartridge heaters which uses a solid state relay whose output is controlled by the microprocessor using pulse width modulation.

Other variations to the invention can be made without departing from the invention. For instance, the provision of a plurality of catalyst beads interspersed with a plurality of beads of an inert material could be utilised in any catalytic application to give an improved heat transfer and is not limited to the application of hydrocarbon conversion. The appropriate catalyst for particular applications would be known to the skilled man and the particular optimum ratio of catalyst beads to beads of high thermal conductivity would depend on the particular application and the temperature requirements. In such applications, although the interspersion of the respective beads would be preferred, it would be possible to effect a modest improvement in heat transfer by employing other packing techniques in the catalyst column such as a layered structure of alternating catalyst and high thermal conductivity bead layers.

## Claims

1. A VOC analyser comprising an input port, a hydrocarbon to carbon dioxide catalytic converter, an exit port and a CO₂ detector operable to detect the amount of hydrocarbon converted into CO₂, wherein the catalytic converter comprises a housing containing a plurality of beads of a catalyst material and a plurality of beads of an inert material of high thermal conductivity interspersed therein.

2. An analyser according to claim 1, wherein an inert gas purging system is employed to dry the analyser prior to analysis and the sample gas concentration is lowered prior to detection by passing it into an increased volume chamber.

3. An analyser according to claim 1, wherein the sample is circulated into a larger volume using dry inert gas and this simultaneously lowers the relative humidity in the analyser.

4. A method of analysing a hydrocarbon sample using a VOC analyser comprising a sample input port, a hydrocarbon to carbon dioxide catalytic converter, an exit port and a CO₂ detector operable to detect the amount of hydrocarbon converted into CO₂, wherein, prior to combustion, the sample is circulated into a larger volume using dry inert gas and this simultaneously lowers the relative humidity in the analyser.

5. A method of analysing VOC in a gas emission comprising the steps of;
pumping a volume of sample gas into an analyser,
circulating the sample into a larger volume,
reducing the relative humidity in the catalyser,
converting the hydrocarbon sample into CO₂ using a catalytic converter,
and detecting the amount of CO₂ so produced, wherein
the catalytic converter comrises a housing containing a plurality of beads of a catalyst material and a plurality of beads of an inert material of high thermal conductivity interspersed therein.

6. A method according to claim 4 or 5, wherein the steps of circulating the sample into a larger volume and reducing the relative humidity in the catalyser are carried out in a single step using a dry inert gas.

7. A catalyst assembly comprising an input port, a hydrocarbon to carbon dioxide catalytic converter, and an exit port, wherein the catalytic converter comprises a housing containing a plurality of beads of a catalyst material and a plurality of beads of an inert material of high thermal conductivity interspersed therein.

8. A catalyst assembly according to claim 7, wherein the housing comprises a tube of high thermal conductivity which is itself housed within a block of material of high thermal conductivity including heating means.

9. A catalyst assembly according to claim 7 or 8, wherein the beads and housing are made of an inert corrosion resistant material such as stainless steel with a high molybdenum content.
